# EUROPEAN PATENT SPECIFICATION

(11) **EP 2 280 190 B1**
(45) Date of publication and mention of the grant of the patent: **19.09.2012**
(21) Application number: 10169324.0
(22) Date of filing: 13.07.2010
(51) Int. Cl.: F16H 7/08

(54) **Chain tensioner**
Kettenspanner
Tendeur de chaîne

(30) Priority: 14.07.2009 JP 2009165532; 22.07.2009 JP 2009171364
(43) Date of publication of application: 02.02.2011
(73) Proprietor: NTN Corporation, Osaka-shi, Osaka (JP)
(72) Inventor: Kitano, Satoshi c/o NTN Corporation, Iwata-shi Shizuoka (JP); Hayakawa, Hisashi c/o NTN Corporation, Iwata-shi Shizuoka (JP); Ryouno, Yoshiaki c/o NTN Corporation, Iwata-shi Shizuoka (JP)
(74) Representative: Grünecker, Kinkeldey, Stockmair & Schwanhäusser

(56) References cited:
- JP-A- 10 132 039
- JP-A- 10 132 040
- US-A1- 2008 280 712

## Description

### BACKGROUND OF THE INVENTION

This invention relates to a chain tensioner used to maintain the tension of a timing chain for driving camshafts of an automotive engine.

In an automotive engine, the rotation of the crankshaft is ordinarily transmitted to camshafts through a timing chain, thereby opening and closing valves of combustion chambers by the rotation of the camshafts. In order to keep the tension of the chain within an optimum range, a tension adjusting assembly is often used which comprises a chain guide pivotable about a pivot shaft, and a chain tensioner pressing the chain guide against the chain.

A known chain tensioner of this type is disclosed e.g. in JP Patent Publication 10-132039 which includes a cylindrical cylinder having an open end and a closed end, and a cylindrical plunger axially slidably inserted in the cylinder. The plunger has a bottom and an open end inserted in the cylinder. A screw rod having an external thread on its outer periphery is inserted in the plunger with its external thread in threaded engagement with an internal thread formed on the inner periphery of the plunger. The screw rod has an end protruding from the plunger and in abutment with a rod seat provided in the cylinder. A return spring is mounted between the screw rod and the plunger, biasing the plunger to from the cylinder.

With this chain tensioner, when the tension of the chain increases while the engine is running, the plunger is pushed into the cylinder under the tension of the chain, thus preventing over-tensioning of the chain. At this time, the screw rod gradually turns relative to the plunger, while moving back and forth within the range of the gap between the internal and external threads due to vibration of the chain.

When the tension of the chain decreases while the engine is running, the plunger protrudes from the cylinder under the biasing force of the return spring, thereby eliminating slackness of the chain.

While the engine is not running, even if the tension of the chain is high due to stopped positions of the cams, since the chain does not vibrate in this state, the internal thread of the plunger is supported by the external thread of the screw rod, so that the plunger remains fixed in position. This minimizes slackening of the chain when the engine is restarted, thus allowing smooth startup of the engine.

With this chain tensioner, a load that tends to push in the plunger is removed during maintenance of the engine (such as when replacing the chain guide), the return spring protrudes from the cylinder under the biasing force of the return spring.

In this state, since the plunger markedly protrudes from the cylinder, it is necessary to dismount the chain tensioner from the engine, push in the plunger into the cylinder, and remount the chain tensioner to the engine. It is troublesome to dismount the chain tensioner from the engine.

An object of the present invention is to provide a chain tensioner which allows easy maintenance of the engine.

### SUMMARY OF THE INVENTION

In order to achieve this object, the cylinder is formed with a threaded hole extending therethrough from its outer periphery to inner periphery at its portion near the open end of the cylinder.

With this arrangement, by inserting a small screw into this threaded hole and tightening it until the tip of the small screw is pressed against the outer periphery of the plunger, the plunger can be fixed in any desired position. Thus, it is possible to prevent the plunger from protruding from the cylinder under the biasing force of the return spring, during maintenance of the engine. This in turn eliminates the need to dismount the chain tensioner from the engine.

The inner periphery of the cylinder may have at its open end a large-diameter portion having a larger diameter than the sliding surface of the cylinder that is in sliding contact with the plunger, and the threaded hole may have a radially inner end thereof located at this large-diameter portion. With this arrangement, since the large-diameter portion increases the radial gap between the plunger and the cylinder, burrs produced at the end portion of the threaded hole near the inner periphery of the cylinder when forming the threaded hole do not interfere with the outer periphery of the plunger.

Alternatively, an axial groove may be formed in the inner periphery of the cylinder at its open end, and the threaded hole may have its radially inner end located at the axial groove. With this arrangement too, since the axial groove increases the radial gap between the plunger and the cylinder, burrs produced at the end portion of the threaded hole near the inner periphery of the cylinder when forming the threaded hole do not interfere with the outer periphery of the plunger.

A seating surface may be formed on the outer periphery of the cylinder which is configured to be supported by an engine block. In this case, the threaded hole is preferably arranged diametrically opposite to the seating surface. With this arrangement, the small screw is accessible through a small window formed in the chain cover to tighten the small screw into the threaded hole.

The small screw may be one having a hexagonal hole, one having a hexagonal head, one with a slot, or one having a cross recess. Such a small screw may be threaded into the threaded hole beforehand. In this case, a nut may be mounted to a portion of the small screw protruding from the threaded hole. With this arrangement, by tightening the nut, it is possible to prevent loosening of the small screw.

This chain tensioner may include an oil supply passage through which hydraulic oil is configured to be introduced into a pressure chamber defined by the plunger and the cylinder, and a check valve provided at the end of the oil supply passage located at the pressure chamber for allowing only a flow of hydraulic oil from the oil supply passage into the pressure chamber. With this arrangement, when the tension of the chain increases, hydraulic oil in the pressure chamber leaks out through an leakage gap defined between the sliding surfaces of the plunger and the cylinder, so that a damper effect is produced by the viscous resistance of the hydraulic oil that flows through the leakage gap.

In this case, preferably, the cylinder is formed with a through hole having an internal thread on its inner periphery so that the pressure chamber communicates with the outer air through the through hole, and the chain tensioner further includes a hollow externally threaded member in threaded engagement with the internal thread of the through hole and defining a valve body mounting chamber therein, a valve seat having a valve hole and provided at the end of the externally threaded member near the pressure chamber for separating the valve body mounting chamber from outside thereof, a valve body mounted in the valve body mounting chamber for opening and closing the valve hole of the valve seat, and a valve spring mounted in the valve body mounting chamber biasing the valve body in the direction to close the valve hole, wherein the valve body is configured to open the valve hole if the pressure in the pressure chamber exceeds a predetermined pressure value, thereby releasing pressure in the pressure chamber.

With this arrangement, since air in the pressure chamber is discharged through the helical thread gap defined between the externally threaded member and the internal thread into the outer air, even if air is mixed into hydraulic oil supplied from the oil pump into the pressure chamber when the engine is started, the damper function is less likely to deteriorate. Also, if the pressure in the pressure chamber exceeds a predetermined pressure value, the valve body mounted in the externally threaded member opens the valve hole, releasing pressure in the pressure chamber, so that the chain is less likely to be over-tensioned. Further, since the valve body for releasing pressure is mounted in the externally threaded member, there is no need to increase the length of the plunger or increase the size of the cylinder in order to provide a separate relief valve.

The valve seat may be integral with the externally threaded member. But preferably, the valve seat is a separate member from the externally threaded member and is press-fitted into and fixed to the externally threaded member, because such a separate valve seat can be formed easily with high accuracy.

In this case, an air vent groove may be formed in the surface of the valve seat that contacts the valve body through which the valve mounting chamber communicates with the valve hole. With this arrangement, even if the thread gap is clogged with foreign matter mixed in hydraulic oil, such as soot and other contaminants, air can still be discharged through the air vent groove. Thus, this chain tensioner can maintain air discharging ability over a prolonged period of time.

Preferably, a plurality of such air vent grooves are provided so as to be circumferentially spaced from each other. With this arrangement, even if the chain tensioner is used with the externally threaded member inclined relative to the vertical direction, air can be reliably and stably discharged irrespective of the angular position of the externally threaded member.

The externally threaded member may comprise a threaded shaft portion and a head having a larger diameter than the threaded shaft portion, and the chain tensioner may include a spring washer having two circumferentially separate ends and disposed between the head of the externally threaded member and the cylinder. With this arrangement, the thread gap remains in communication with the outer air through the gap between the two separate ends of the spring washer.

Alternatively, the externally threaded member may comprise a threaded shaft portion and a head having a larger diameter than the threaded shaft portion, and the chain tensioner may include a washer including a plurality of radially extending twisted teeth that are circumferentially spaced apart from each other and disposed between the head and the cylinder. With this arrangement, passages are defined between the respective adjacent teeth, so that even if one or some of the passages get clogged, the thread gap can be kept in communication with the outer air through the remaining passages. This arrangement is thus more reliable.

The chain tensioner may further include a stopper member mounted in the valve body mounting chamber for restricting the moving stroke of the valve body. With this arrangement, it is possible to reduce the amount of hydraulic that flows out when the valve hole is opened by the valve body, thus preventing excessive drop in pressure in the pressure chamber.

The stopper member may comprise a flange supporting one end of the valve spring, and a shank extending from the flange toward the valve body, the shank being configured to support the valve body.

With the chain tensioner according to this invention, by tightening the small screw into the threaded hole formed in the cylinder at its open end portion, the plunger can be fixed in any desired position, which in turn eliminates the need to dismount the chain tensioner from the engine during maintenance of the engine.

### BRIEF DESCRIPTION OF THE DRAWINGS

Fig. 1 is a front view of a chain transmission assembly including the chain tensioner embodying the present invention;
Fig. 2 is a partial enlarged sectional view of the chain transmission assembly of Fig. 1, showing the chain tensioner;
Fig. 3 is an enlarged sectional view taken along line III-III of Fig. 1;
Fig. 4 is a partial enlarged sectional view of the chain tensioner of Fig. 2, showing its externally threaded member;
Fig. 5 is a partial enlarged sectional view of Fig. 4 showing a valve seat;
Fig. 6 is an enlarged sectional view taken along line VI-VI of Fig. 3;
Fig. 7 shows how a small screw is tightened into the threaded hole shown in Fig. 3;
Fig. 8 shows the initial set position of the plunger of Fig. 3;
Fig. 9A to 9D show variations of the small screw shown in Fig. 8, of which Fig. 9A shows a small screw having a hexagonal hole, Fig. 9B shows one having a hexagonal head, Fig. 9C shows one with a slot, and Fig. 9D shows one having a cross recess;
Fig. 10 shows a modification in which instead of the large-diameter portion of the inner periphery shown in Fig. 3, an axial groove is formed on the inner periphery of the cylinder at its open end portion;
Fig. 11 is an enlarged sectional view taken along line XI-XI of Fig. 10;
Fig. 12 is an enlarged sectional view of a modification in which the spring washer of Fig. 4 is replaced by a washer with teeth;
Fig. 13 is an enlarged perspective view of the washer with teeth of Fig. 12; and
Fig. 14 is an enlarged sectional view of a modification in which a stopper member is mounted in the valve body mounting chamber of Fig. 12.

### DETAILED DESCRIPTION OF THE PREFERRED EMBODIMENTS

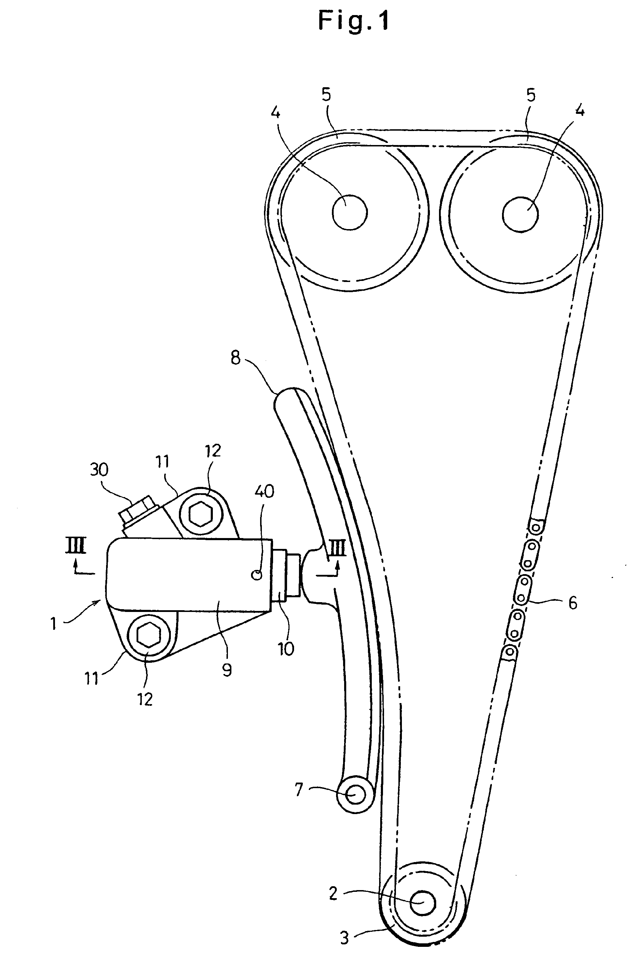

Fig. 1 shows a chain transmission assembly including a chain tensioner 1 embodying the present invention. This chain transmission assembly includes a sprocket 3 fixed to an engine crankshaft 2, sprockets 5 fixed to camshafts 4, and a chain 6 trained about the sprockets 3 and 5. Through the chain 6, the rotation of the crankshaft 2 is transmitted to the camshafts 4, thereby opening and closing valves (not shown) of combustion chambers (not shown either) with the rotation of the camshafts 4.

A chain guide 8 which is pivotable about a pivot shaft 7 is in contact with the chain 6. The chain tensioner 1 presses the chain 6 through the chain guide 8.

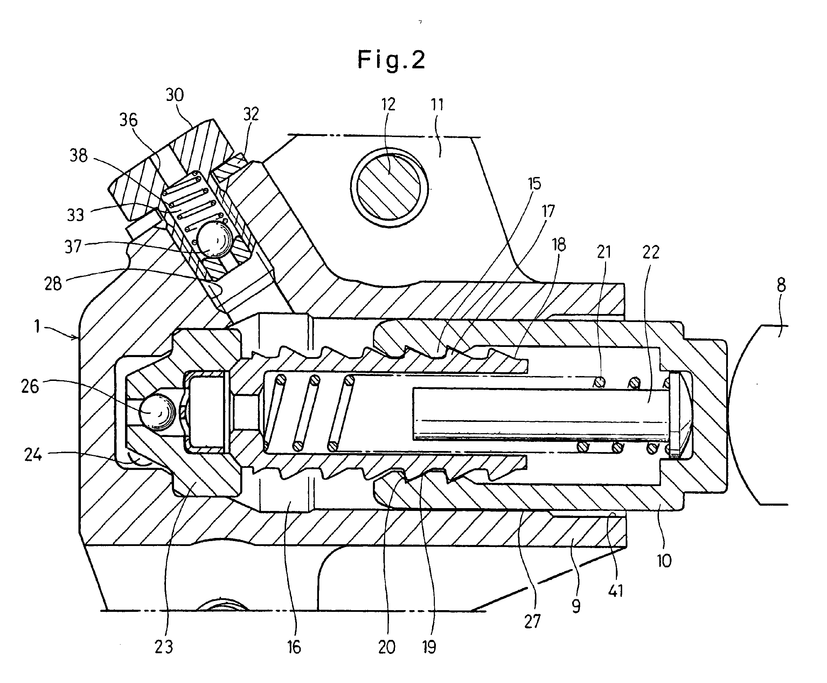

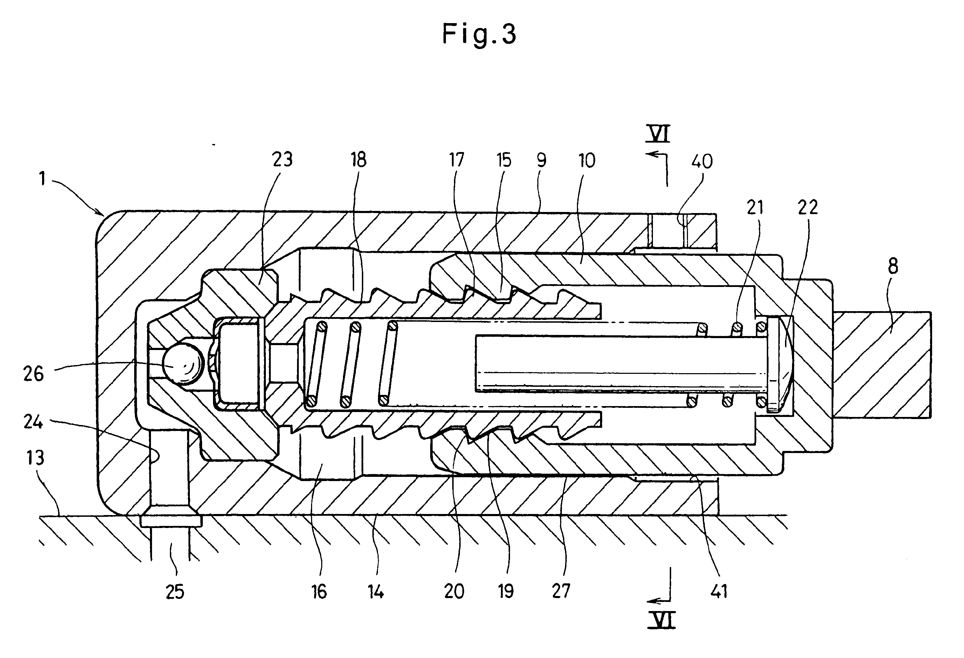

As shown in Fig. 2, the chain tensioner includes a cylindrical cylinder 9 having open and closed ends, and a plunger 10 axially slidably inserted in the cylinder 9. The cylinder 9 is fixed to a side of an engine block 13 (shown in Fig. 3) by fastening a plurality of mounting pieces 11 integrally formed on the outer periphery of the cylinder 9 to the engine block by means of bolts 12.

As shown in Fig. 3, the cylinder 9 has a seating surface 14 on its outer periphery which is supported by the side of the engine block 13. A chain cover (not shown) is mounted to the engine block 13 so as to face the side of the engine block 13 with the chain tensioner 1 disposed therebetween.

The plunger has a bottom and an open end inserted in the cylinder 9, and is formed with an internal thread 15 on its inner periphery. A screw rod 18 is mounted in a pressure chamber 16 defined by the cylinder 9 and the plunger 10. The screw rod 18 has an external thread 17 on its outer periphery that is in threaded engagement with the internal thread 15 of the plunger 10.

The external thread 17 and the internal thread 15 have a serration-shaped section with their pressure flanks 19, which receive pressure when a load is applied that tends to push the plunger 10 into the cylinder 9, having a larger flank angle than their clearance flanks 20.

The flank angle of the pressure flanks 19 is determined such that when a load tending to push the screw rod 18 into the plunger 10 is applied statically, the screw rod 18 is prevented from rotating due to the frictional resistance between the pressure flanks 19. The flank angle of the clearance flanks 20 is determined such that when a load tending to push the screw rod 18 out of the plunger 10 is applied statically, the screw rod 18 can rotate due to slippage between the clearance flanks 20.

A return spring 21 is mounted between the plunger 10 and the screw rod 18. The return spring 21 has one end thereof supported by the plunger 10 through a spring seat 22 and presses at the other end the screw rod 18 in the direction to protrude from the plunger 10. One end of the screw rod 18 protrudes from the plunger 10 and abuts on a rod seat 23 pressed into and fixed to the cylinder 9.

The plunger 10 is biased in the direction to protrude from the cylinder 9 under the biasing force of the return spring 21. The plunger 10 has an end protruding from the cylinder 9 and kept in abutment with the chain guide 8, thereby pressing the chain 6 through the chain guide 8.

An oil supply passage 24 is formed in the closed end of the cylinder 9 which communicates with the pressure chamber 16 defined by the cylinder 9 and the plunger 10. The oil supply passage 24 also communicates with an oil hole 25 formed in the engine block 13. Hydraulic oil supplied from an oil pump (not shown) into the oil hole 25 is thus introduced into the pressure chamber 16 through the oil supply passage 24. A check valve 26 is provided at the end of the oil supply passage 24 facing the pressure chamber 16 which permits only the flow of hydraulic oil from the oil supply passage 24 into the pressure chamber 16.

A minute leakage gap 27 is defined between the sliding surfaces of the plunger 10 and the cylinder 9 through which hydraulic oil in the pressure chamber 16 can leak out.

As shown in Fig. 2, a through hole 28 is formed in the cylinder 9 through which the pressure chamber 16 communicates with the outer air. The through hole 28 extends downwardly from the top surface of the cylinder 9 to the pressure chamber 16.

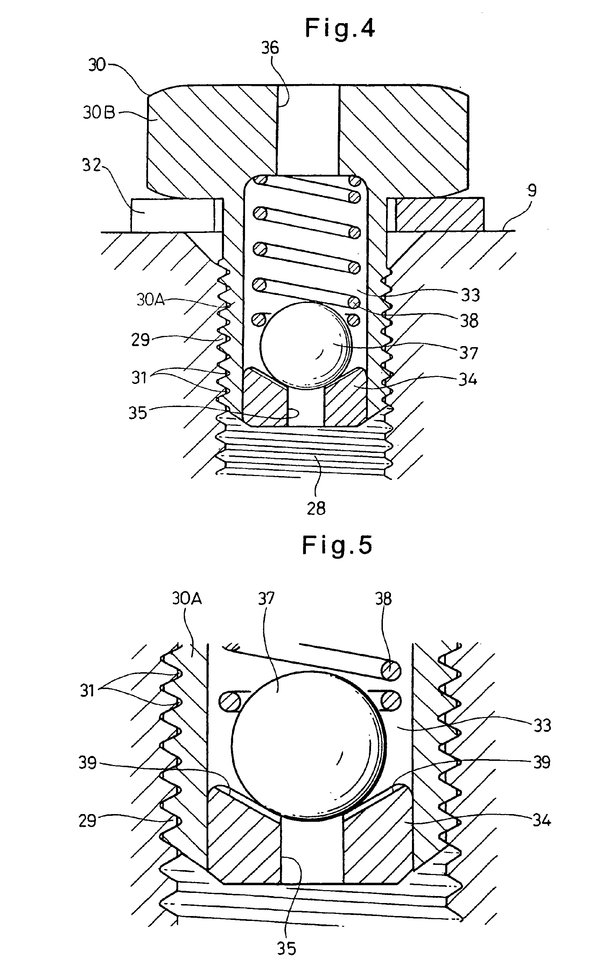

As shown in Fig. 4, an internal thread 29 is formed on the inner periphery of the through hole 28 with which an externally threaded member 30 is in threaded engagement. The externally threaded member 30 comprises a threaded shaft portion 30A having an external thread on its outer periphery, and a head 30B provided at one end of the threaded shaft portion 30A. The head 30B has a hexagonal outer periphery with which a tool such as a spanner is engaged to tighten the externally threaded member 30.

A helical thread gap 31 is defined between the threaded shaft portion 30A and the internal thread 29 through which air can pass. The head 30B has a larger diameter than the threaded shaft portion 30A. A spring washer 32 having circumferentially separated ends is disposed between the head 30B and the cylinder 9, The thread gap 31 communicates with the outer air though the gap defined between the circumferentially separated ends of the spring washer 32.

The externally threaded member 30 is a hollow member defining therein a valve body mounting chamber 33. The externally threaded member 30 has a valve seat 34 at its end near the pressure chamber 16 which partition the interior of the valve body mounting chamber 33 from the exterior. The valve seat 34 is a separate member from the body of the externally threaded member 30, and is pressed into and fixed to the hollow threaded shaft portion 30A. The valve seat 34 is formed with a valve hole 35 extending through its center. The head 30B of the externally threaded member 30 has an oil hole 36 through which the valve body mounting chamber 33 communicates with the outer air.

In the valve body mounting chamber 33 are mounted a valve body 37 for opening and closing the valve hole 35 of the valve seat 34, and a valve spring 38 biasing the valve body 37 in the valve closing direction. The valve body 37 is a spherical member configured to open and close the valve hole 35 by moving into and out of contact with valve seat 34. The valve spring 38 has its one end supported on the inner end surface near the outer air, and presses the valve body 37 at the other end. The valve body 37, valve spring 38 and valve seat 34 constitute a relieve valve configured such that the valve body 37 opens the valve hole 35, thereby releasing pressure in the pressure chamber 16, if the pressure in the pressure chamber 16 exceeds a predetermined value.

As shown in Fig. 5, one or a plurality of circumferentially spaced air vent grooves 39 are formed in the surface of the valve seat 34 that contacts the valve body 37 through which the valve body mounting chamber 33 communicates with the valve hole 35.

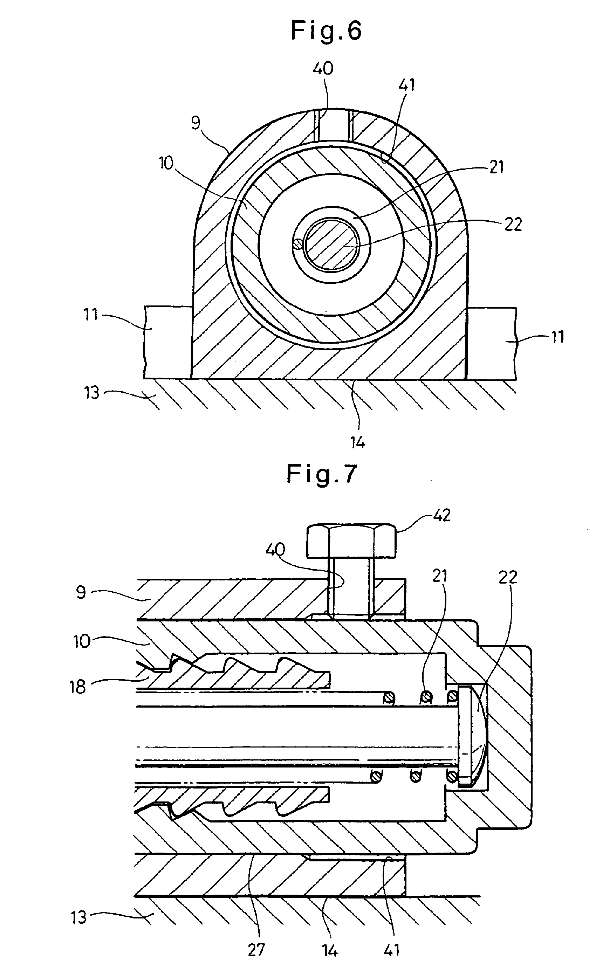

The externally threaded member 30 may be made of a metal. But since no strong tightening force is required for the member 30, it may be made of a resin. On the other hand, since the valve body 37 is moved into and out of contact with the valve seat 34, by making the vale seat 34 from a metal, its wear resistance improves, thus preventing change in operating pressure of the valve body 37 due to wear of the valve seat 34.
As shown in Fig. 3, a threaded hole 40 extends through the cylinder 9 from its outer periphery to inner outer periphery near its open end. The radially inner surface of the cylinder 9 includes a large-diameter portion 41 extending to the open end of the cylinder 9 and having a larger diameter than the sliding surface of the cylinder 9 that is in sliding contact with the plunger 10. The threaded hole 40 has its radially inner end open to the large-diameter portion 41. As shown in Fig. 6, the threaded hole 40 is provided diametrically opposite to the seating surface 14.

Now the operation of this chain tensioner is described.

When the tension of the chain 6 decreases while the engine is running, the plunger 10 protrudes from the cylinder 9 under the biasing force of the return spring 21, thereby eliminating slackness of the chain 6. At this time, hydraulic oil supplied from the oil pump flows through the oil supply passage 24 into the pressure chamber 16, thus quickly moving the plunger 10.

When the tension of the chain 6 increases while the engine is running, the plunger 10 is pushed into the cylinder 9 under the tension of the chain 6, thereby reducing the tension of the chain 6. At this time, the screw rod 18 gradually rotates relative to the plunger 10, while moving back and forth within the range of the axial gap between the external thread 17 and the internal thread 15 due to vibrations of the chain 6. Also, hydraulic oil in the pressure chamber 16 leaks out through the leakage gap between the sliding surfaces of the plunger 10 and the cylinder 9. Thus, the plunger 10 moves slowly due to the damper function produced by the viscous resistance of hydraulic oil that passes the leakage gap 27.

When the engine is not running, the tension of the chain 6 may remain high according to the stopped positions of the camshafts 4. In this case, since the chain does not vibrate, the internal thread 15 of the plunger 10 is supported by the external thread 17 of the screw rod 18, so that the plunger 10 is fixed in position. Thus, when the engine is restarted, the chain is less likely to slacken, which allows smooth startup of the engine.

When the engine is stopped, the oil pump stops and the level of hydraulic oil in the oil supply passage 24 drops. Thus, when the engine is restarted, air may mix into hydraulic oil being supplied through the oil supply passage 24 into the pressure chamber 16. But air mixed into the pressure chamber 16 is discharged into the atmosphere through the thread gap 31 between the externally threaded member 30 and the internal thread 29, and the gap between the circumferentially separated ends of the spring washer 32. Thus, the damper function is less likely to deteriorate due to air mixed in the pressure chamber 16.

With this chain tensioner 1, even while the engine is not running, the plunger 10 is continuously biased by the return spring 21 in the direction to protrude from the cylinder 9. Thus, when a load tending to push in the plunger 10 is removed during maintenance of the engine (such as when replacing the chain guide 8), the plunger 10 may excessively protrude from the cylinder 9 under the biasing force of the return spring 21.

If the plunger 10 protrudes excessively from the cylinder 9, it is necessary to dismount the chain tensioner 1 from the engine block 13, push the plunger 10 into the cylinder 9, and then remount the chain tensioner 1 to the engine block 13.

But with this chain tensioner 1, as shown in Fig. 7, by threading a small screw 42 into the threaded hole 40 until its tip is pressed against the outer periphery of the plunger 10, the plunger 10 can be fixed to the cylinder 9 at any desired position relative to the cylinder 9. This prevents excessive protrusion of the plunger 10 from the cylinder 9 under the biasing force of the return spring 21 during maintenance of the engine, which in turn eliminates the need to dismount the chain tensioner 1 from the engine block 13.

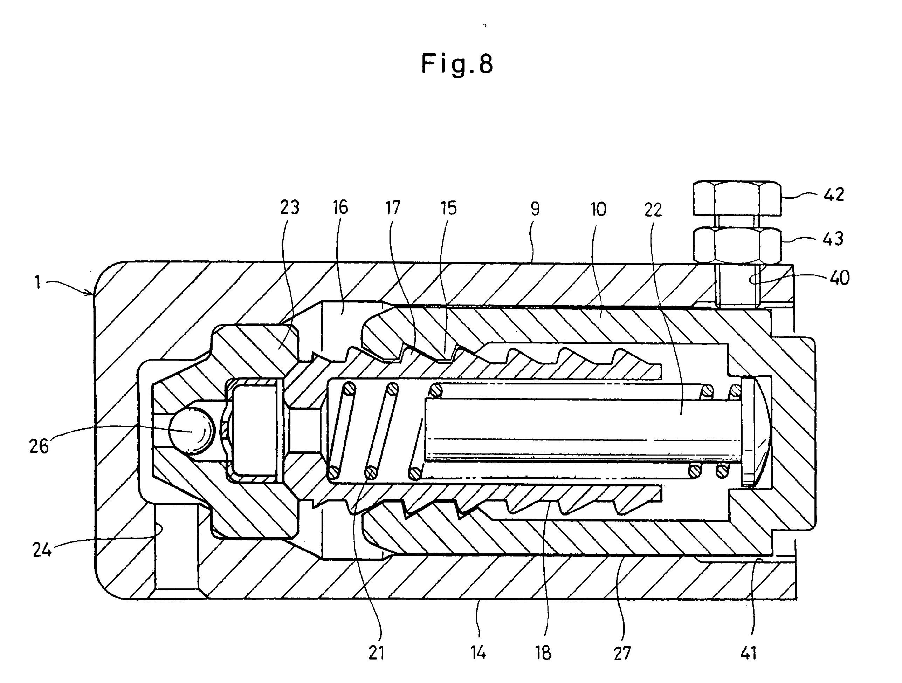

As shown in Fig. 8, with this chain tensioner 1, it is possible to keep the plunger 10 pushed in the cylinder 9 (initial set position). This eliminates the need to keep pressing the plunger 10 when mounting the chain tensioner 1 to the engine block 13. This chain tensioner can thus be easily mounted to the engine block 13.

As shown in Fig. 8, a nut 43 may be mounted to the portion of the small screw 42 protruding from the threaded hole 40 to prevent loosening of the small screw 42 due to vibrations and impacts during transportation of the chain tensioner 1.

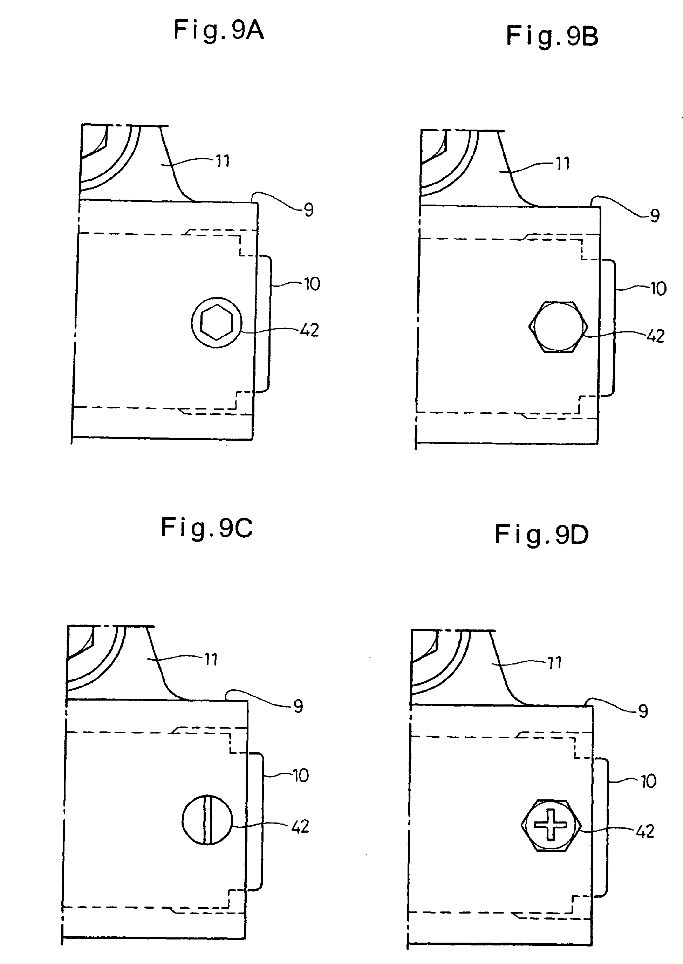

The small screw 42 may be one having a hexagonal hole (see Fig. 9A), one having a hexagonal head (Fig. 9B), one with a slot (Fig. 9C), or one having a cross recess (Fig. 9D).

The circumferential position of the threaded hole 40 formed in the cylinder 9 may be changed to e.g. the uppermost position in Fig. 1. But preferably, as in the embodiment, the threaded hole 40 is provided diametrically opposite to the seating surface 14. With this arrangement, the small screw 42 is accessible through a small window (not shown) formed in the chain cover to tighten the small screw 42 into the threaded hole 40.

When forming the threaded hole 40, burrs may be produced at the end portion of the threaded hole 40 near the inner periphery of the cylinder 9. Such burrs could interfere with the outer periphery of the plunger 10, thereby impairing sliding movement of the plunger 10.

But with this chain tensioner 1, since the large-diameter portion 41 formed on the inner periphery of the cylinder 9 at its open end portion increases the radial gap between the plunger 10 and the cylinder 9, and the radially inner end of the threaded hole 40 is located on the large-diameter portion 41, burrs produced at the end portion of the threaded hole 40 near the inner periphery of the cylinder 9 do not interfere with the outer periphery of the plunger 10.

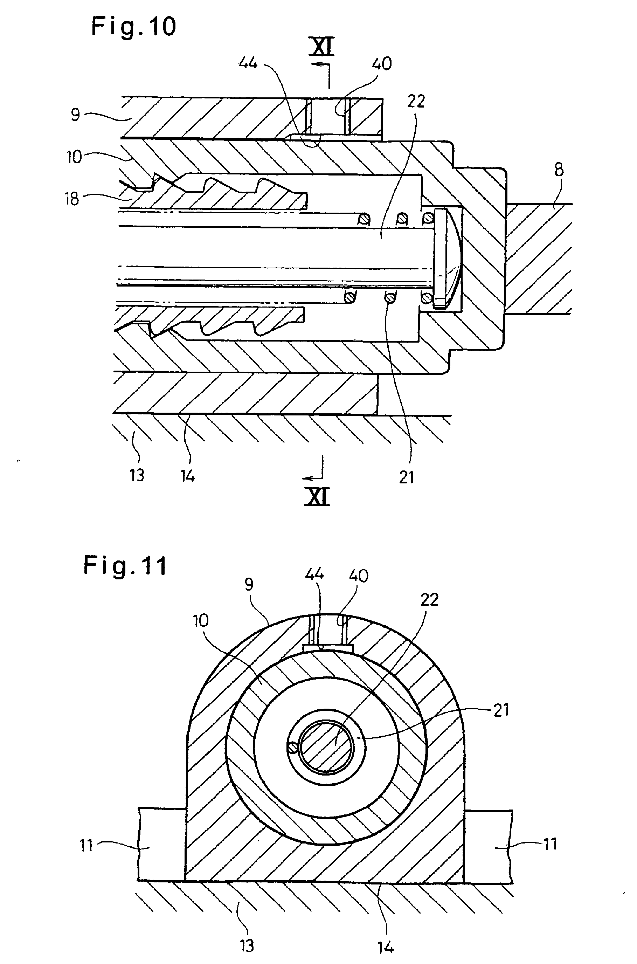

Instead of the large-diameter portion 41, as shown in Figs. 10 and 11, an axial groove 44 may be formed in the inner periphery of the cylinder 9 at its open end portion, with the radially inner end of the threaded hole 40 located at the axial groove 44. With this arrangement too, since the axial groove 44 increases the radial gap between the plunger 10 and the cylinder 9, burrs produced when forming the threaded hole 40 at the open end portion of the cylinder 9 never interfere with the outer periphery of the plunger 10.

With this chain tensioner 1, since the valve body 37 and the valve spring 38 for releasing pressure are mounted in the externally threaded member 30, there is no need to increase the length of the plunger 10 or increase the size of the cylinder 9 in order to provide a separate relief valve.

The valve seat 34 may be integral with the externally threaded member 30. But the separate valve seat 34 shown in the embodiment, which is press-fitted into the threaded shaft portion 30A, can be manufactured more easily and with higher accuracy.

With this chain tensioner 1, since the air vent grooves 39 are formed in the surface of the valve seat 34 that contacts the valve body 37, even if the thread gap 31 is clogged with foreign matter mixed in hydraulic oil, such as soot and other contaminants, air can still be discharged through the air vent grooves 39. Thus, this chain tensioner can maintain air discharging ability over a prolonged period of time.

Only one such air vent groove 39 may be formed. But preferably, as in the embodiment, a plurality of such air vent grooves 39 are formed so as to be circumferentially spaced from each other, because with this arrangement, even if the chain tensioner 1 is used with the externally threaded member 30 inclined relative to the vertical direction, air can be reliably and stably discharged irrespective of the angular position of the externally threaded member 30.

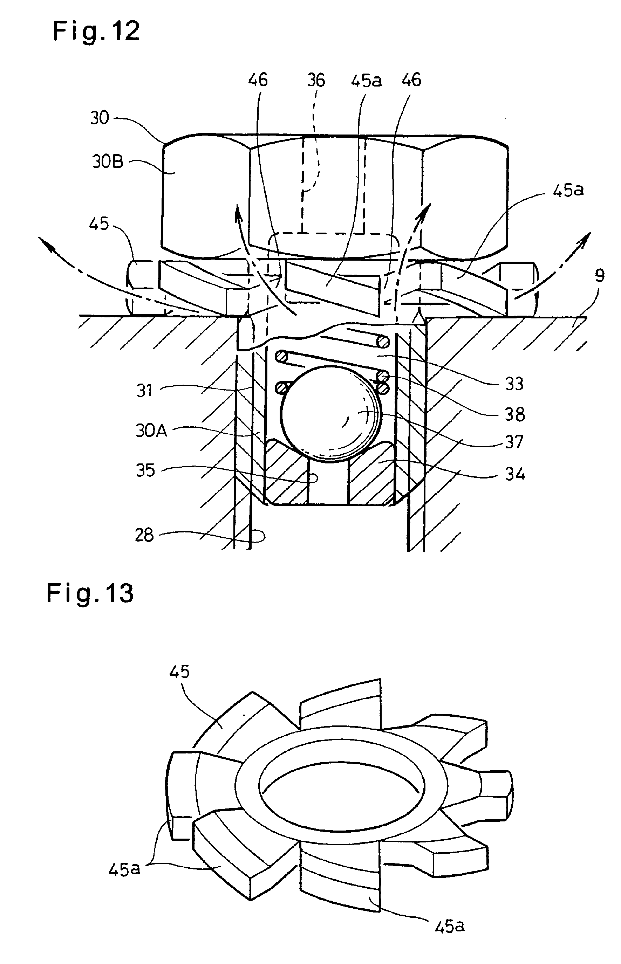

In the embodiment, the spring washer 32 is disposed between the head 30B of the externally threaded member 30 and the cylinder 9. But instead, as shown in Figs. 12 and 13, a washer 45 having a plurality of circumferentially spaced apart radially extending twisted teeth 45a may be disposed. With this arrangement, passages 46 are defined between the respective adjacent teeth, so that even if one or some of the passages 46 get clogged, the thread gap 31 can be kept in communication with the outer air through the remaining passages 46. This arrangement is thus more reliable.

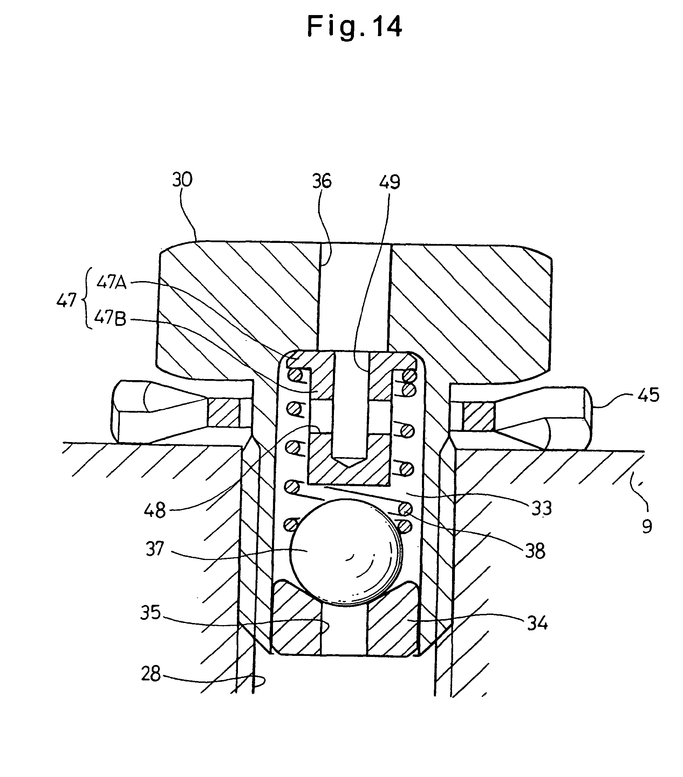

As shown in Fig. 14, a stopper member 47 may be mounted in the valve body mounting chamber 33 for restricting the moving stroke of the valve body 37. The stopper member 47 comprises a flange 47A supporting one end of the valve spring 38, and a shank 47B extending from the flange 47A toward the valve body 37. The valve body 37 is adapted to be supported on the tip of the shank 47B. The shank 47B is formed with a diametrical hole 48 diametrically through the shank 47B, and an axial hole 49 intersecting the diametrical hole 48 and connected to the oil hole 36. Thus, the valve mounting chamber 33 communicates with the outer air through the diametrical hole 49 and the axial hole 49.

By mounting the stopper member 47 in the valve body mounting chamber 33, it is possible to reduce the amount of hydraulic that flows out when the valve hole 35 is opened by the valve body 37, thus preventing excessive drop in pressure in the pressure chamber 16.

## Claims

1. A chain tensioner comprising a cylindrical cylinder (9) having an open end and a closed end, a cylindrical plunger (10) axially slidably inserted in the cylinder (9), said plunger (10) having a bottom and an open end received in the cylinder (9) and being formed with an internal thread (15) on its inner periphery, a screw rod (18) having an external thread (17) on its outer periphery that is in threaded engagement with the internal thread (15) of the plunger (10), a rod seat (23) provided in the cylinder (9), said screw rod (18) having an end protruding from the plunger (10) and in abutment with the rod seat (23), and a return spring (21) disposed between the screw rod (18) and the plunger (10) and biasing the plunger (10) in a direction to protrude from the cylinder (9),
**characterized in that** the cylinder (9) is formed with a threaded hole (40) extending therethrough from its outer periphery to inner periphery at its portion near the open end of the cylinder (9).

2. The chain tensioner of claim 1 wherein the inner periphery of the cylinder (9) has at the open end of the cylinder (9) a large-diameter portion (41) having a larger diameter than a sliding surface of the cylinder (9) that is in sliding contact with the plunger (10), wherein the threaded hole (40) has a radially inner end thereof located at said large-diameter portion (41).

3. The chain tensioner of claim 1 wherein an axial groove (44) is formed in the inner periphery of the cylinder (9) at its open end, and wherein the threaded hole (40) has a radially inner end thereof located at the axial groove (44).

4. The chain tensioner of any of claims 1 to 3 wherein a seating surface (14) is formed on the outer periphery of the cylinder (9) which is configured to be supported by an engine block (13), and wherein said threaded hole (40) is provided is arranged diametrically opposite to the seating surface (14).

5. The chain tensioner of claim 4 further comprising a small screw (42) in threaded engagement with the threaded hole (40).

6. The chain tensioner of claim 5 further comprising a nut (43) mounted to a portion of the small screw (42) protruding from the threaded hole (40) for preventing loosening of the small screw (42).

7. The chain tensioner of any of claims 1 to 6 further comprising an oil supply passage (24) through which hydraulic oil is configured to be introduced into a pressure chamber (16) defined by the plunger (10) and the cylinder (9), a check valve (26) provided at an end of the oil supply passage (24) located at the pressure chamber (16) for allowing only a flow of hydraulic oil from the oil supply passage (24) into the pressure chamber (9), wherein the cylinder (9) is formed with a through hole (28) having an internal thread (29) on its inner periphery, said pressure chamber (16) communicating with the outer air through the through hole (28), a hollow externally threaded member (30) in threaded engagement with the internal thread (29) of the through hole (28) and defining a valve body mounting chamber therein, a valve seat (34) having a valve hole (35) and provided at an end of the externally threaded member (30) near the pressure chamber (16) for separating the valve body mounting chamber (33) from outside thereof, a valve body (37) mounted in the valve body mounting chamber (33) for opening and closing the valve hole (35) of the valve seat (34), and a valve spring (38) mounted in the valve body mounting chamber (33) biasing the valve body (37) in a direction to close the valve hole (35), wherein the valve body (37) is configured to open the valve hole (35) if the pressure in the pressure chamber (16) exceeds a predetermined pressure value, thereby releasing pressure in the pressure chamber (16).

8. The chain tensioner of claim 7 wherein the valve seat (34) is a separate member from the externally threaded member (30) and is press-fitted into and fixed to the externally threaded member (30).

9. The chain tensioner of claim 7 or 8 wherein an air vent groove (39) is formed in the surface of the valve seat (34) that contacts the valve body (37) through which the valve mounting chamber (33) communicates with the valve hole (35).

10. The chain tensioner of claim 9 wherein there are a plurality of the air vent grooves (39) that are circumferentially spaced from each other.

11. The chain tensioner of any of claims 7 to 10 wherein the externally threaded member (30) comprises a threaded shaft portion (30A) and a head (30B) having a larger diameter than the threaded shaft portion (30A), and wherein the chain tensioner further comprises a spring washer (32) having two circumferentially separate ends and disposed between the head (30B) and the cylinder (9).

12. The chain tensioner of any of claims 7 to 10 wherein the externally threaded member (30) comprises a threaded shaft portion (30A) and a head (30B) having a larger diameter than the threaded shaft portion (30A), and wherein the chain tensioner further comprises a washer (45) including a plurality of radially extending twisted teeth (45a) that are circumferentially spaced apart from each other and disposed between the head (30B) and the cylinder (9).

13. The chain tensioner of any of claims 7 to 12 further comprising a stopper member (47) mounted in the valve body mounting chamber (33) for restricting the moving stroke of the valve body (37).

14. The chain tensioner of claim 13 wherein the stopper member (47) comprises a flange (47A) supporting one end of the valve spring (38), and a shank (47B) extending from the flange (47A) toward the valve body (37), said shank (47B) being configured to support the valve body (37).

## Patentansprüche

1. Kettenspanner, aufweisend einen zylindrischen Zylinder (9), mit einem offenen Ende und einem geschlossenen Ende, einen zylindrischen Kolben (10), axial gleitbar in den Zylinder (9) eingesetzt, wobei der Kolben (10) einen Boden und ein offenes Ende, aufgenommen in dem Zylinder (9), hat und mit einem Innengewinde (15) an seinem Innenumfang gebildet ist, einen Spindelstab (18) mit einem Außengewinde (17) an seinem Außenumfang hat, der im Gewindeeingriff mit dem Innengewinde (15) des Kolbens (10) ist, wobei ein Stabsitz (23) in dem Zylinder (9) vorgesehen ist, wobei der Spindelstab (18) ein Ende hat, vorspringend von dem Kolben (10) und in Anlage mit dem Stabsitz (23), und eine Rückholfeder (21), angeordnet zwischen dem Spindelstab (18) und dem Kolben (10) in einer Richtung, um von dem Zylinder (9) vorzuspringen,
**dadurch gekennzeichnet, dass** der Zylinder (9) mit einer Gewindebohrung (40) gebildet ist, die sich von seinem Außenumfang zu dem Innenumfang an seinem Abschnitt nahe dem offenen Ende des Zylinders (9) erstreckt.

2. Kettenspanner nach Anspruch 1, wobei der Innenumfang des Zylinders (9) an dem offenen Ende des Zylinders (9) einen Abschnitt (41) mit großem Durchmesser hat, der einen größeren Durchmesser hat als eine Gleitoberfläche des Zylinders (9), die in Gleitkontakt mit dem Kolben (10) ist, wobei die Gewindebohrung (40) ein radial inneres Ende hat, angeordnet an dem Abschnitt (41) mit großem Durchmesser.

3. Kettenspanner nach Anspruch 1, wobei eine Axialnut (44) in dem Innenumfang des Zylinders (9) an seinem offenen Ende gebildet ist, und wobei die Gewindebohrung (40) ein radial inneres Ende hat, angeordnet an der Axialnut (44).

4. Kettenspanner nach einem der Ansprüche 1 bis 3, wobei eine Sitzoberfläche (14) an dem Außenumfang des Zylinders (9) gebildet ist, die konfiguriert ist, durch einen Motorblock (13) abgestützt zu werden, und wobei die Gewindebohrung (40) vorgesehen ist, diametral gegenüberliegend zu der Sitzoberfläche (14) angeordnet zu sein.

5. Kettenspanner nach Anspruch 4, außerdem aufweisend eine kleine Schraube (42) im Gewindeeingriff mit der Gewindebohrung (40).

6. Kettenspanner nach Anspruch 5, außerdem aufweisend eine Mutter (43), montiert an einem Abschnitt der kleinen Schraube (42), vorspringend von der Gewindebohrung (40), um ein Lösen der kleinen Schraube (42) zu verhindern.

7. Kettenspanner nach einem der Ansprüche 1 bis 6, außerdem aufweisend einen Ölzuführungskanal (24), durch den Hydrauliköl konfiguriert ist, eingeleitet zu werden in eine Druckkammer (16), gebildet durch den Kolben (10) und den Zylinder (9), ein Rückschlagventil (26), vorgesehen an einem Ende des Ölzuführungskanals (24), angeordnet an der Druckkammer (16), um nur eine Strömung des Hydrauliköls aus dem Ölzuführungskanal (24) in die Druckkammer (9) zu gestatten, wobei der Zylinder (9) mit einer Durchgangsbohrung (28) gebildet ist, die ein Innengewinde (29) an ihrem Innenumfang hat, die Druckkammer (16) mit der Außenluft durch die Durchgangsbohrung (28) in Verbindung ist, ein hohles Außengewinde- Teil (30) in Gewindeeingriff mit dem Innengewinde (29) der Durchgangsbohrung (28) ist und darin eine Ventilkörper- Montagekammer bildet, einen Ventilsitz (34), der eine Ventilbohrung (35) hat und an einem Ende des Außengewinde- Teils (30) nahe der Druckkammer (16)vorgesehen ist, um die Ventilkörper-Montagekammer (33) von außen zu trennen, einen Ventilkörper (37), montiert in der Ventilkörper- Montagekammer (33), um die Ventilbohrung (35) des Ventilsitzes (34) zu öffnen oder zu schließen, und eine Ventilfeder (38), montiert in der Ventilkörper- Montagekammer (33), die den Ventilkörper (37) in einer Richtung vorspannt, die Ventilbohrung (35) zu schließen, wobei der Ventilkörper (37) konfiguriert ist, die Ventilbohrung (35) zu öffnen, wenn der Druck in der Druckkammer (16) einen vorbestimmten Druckwert überschreitet, um dadurch den Druck in der Druckkammer (16) zu entlasten.

8. Kettenspanner nach Anspruch 7, wobei der Ventilsitz (34) ein separates Teil von dem Außengewinde- Teil (30) ist und presseingesetzt in und befestigt an dem Außengewinde- Teil (30) ist.

9. Kettenspanner nach Anspruch 7 oder 8, wobei eine Luft- Entlüftungsnut (39) in der Oberfläche des Ventilsitzes (34), der den Ventilkörper (37) berührt, gebildet
ist, durch die die Ventilkörper- Montagekammer (33) mit der Ventilbohrung (35) in Verbindung ist.

10. Kettenspanner nach Anspruch 9, wobei es eine Mehrzahl der Luft- Entlüftungsnuten (39) gibt, die in Umfangsrichtung voneinander beabstandet sind.

11. Kettenspanner nach einem der Ansprüche 7 bis 10, wobei das Außengewinde-Teil (30) aufweist einen Wellenabschnitt (30A) mit Gewinde und einen Kopf (30B), der einen größeren Durchmesser als der Wellenabschnitt (30A) mit Gewinde hat, und wobei der Kettenspanner außerdem aufweist eine Federunterlegscheibe (32) aufweist, mit in Umfangsrichtung zwei separaten Enden und angeordnet zwischen dem Kopf (30B) und dem Zylinder (9).

12. Kettenspanner nach einem der Ansprüche 7 bis 10, wobei das Außengewinde-Teil (30) einen Wellenabschnitt (30A) mit Gewinde und einen Kopf (30B), der einen größeren Durchmesser als der Wellenabschnitt (30A) mit Gewinde hat, aufweist und wobei der Kettenspanner außerdem eine Unterlegscheibe (45) aufweist, die eine Mehrzahl von sich radial erstreckenden verdrehten Zähnen (45a) aufweist, die in Umfangsrichtung voneinander beabstandet und zwischen dem Kopf (30B) und dem Zylinder (9) angeordnet sind.

13. Kettenspanner nach einem der Ansprüche 7 bis 12, außerdem aufweisend ein Anschlagteil (47), montiert in der Ventilkörper- Montagekammer (33), um den Bewegungshub des Ventilkörpers (37) zu begrenzen.

14. Kettenspanner nach Anspruch 13, wobei das Anschlagteil (47) einen Flansch (47A) aufweist, der das eine Ende der Ventilfeder (38) lagert, und einen Schenkel (47B), der sich von dem Flansch (47A) in Richtung zu dem Ventilkörper (37) erstreckt, wobei der Schenkel (47B) konfiguriert ist, den Ventilkörper (37) zu lagern.

## Revendications

1. Tendeur de chaîne comprenant un cylindre cylindrique (9) ayant une extrémité ouverte et une extrémité fermée, un plongeur cylindrique (10) inséré en coulissant axialement dans le cylindre (9), ledit plongeur (10) ayant un fond et une extrémité ouverte reçue dans le cylindre (9) et présentant un filetage interne (15) sur sa périphérie intérieure, une tige filetée (18) ayant un filetage externe (17) sur sa périphérie extérieure qui est en prise de filetage avec le filetage interne (15) du plongeur (10), un siège de tige (23) réalisé dans le cylindre (9), ladite tige filetée (18) ayant une extrémité faisant saillie du plongeur (10) et en butée contre le siège de tige (23), et un ressort de rappel (21) disposé entre la tige filetée (18) et le plongeur (10) et sollicitant le plongeur (10) dans une direction pour faire saillie du cylindre (9),
**caractérisé en ce que** le cylindre (9) présente un trou taraudé (40) s'étendant à travers celui-ci depuis sa périphérie extérieure à la périphérie intérieure à sa portion près de l'extrémité ouverte du cylindre (9).

2. Tendeur de chaîne selon la revendication 1, où la périphérie intérieure du cylindre (9) possède à l'extrémité ouverte du cylindre (9) une portion d'un grand diamètre (41) ayant un plus grand diamètre qu'une surface de glissement du cylindre (9) qui est en contact de glissement avec le plongeur (10), où le trou taraudé (40) a son extrémité radialement intérieure située à ladite portion d'un grand diamètre (41).

3. Tendeur de chaîne selon la revendication 1, où une rainure axiale (44) est formée dans la périphérie intérieure du cylindre (9) à son extrémité ouverte, et où le trou fileté (40) a son extrémité radialement intérieure située à la rainure axiale (44).

4. Tendeur de chaîne selon l'une quelconque des revendications 1 à 3, d'où une surface de siège (14) est formée sur la périphérie extérieure du cylindre (9) qui est configurée pour être supportée par un bloc moteur (13), et où ledit trou fileté (40) est agencé d'une manière diamétralement opposée à la surface de siège (14).

5. Tendeur de chaîne selon la revendication 4, comprenant en outre une petite vis (42) en prise de filetage avec le trou taraudé (40).

6. Tendeur de chaîne selon la revendication 5, comprenant en outre un écrou (43) monté sur une portion de la petite vis (42) dépassant du trou taraudé (40) pour empêcher la perte de la petite vis (42).

7. Tendeur de chaîne selon l'une quelconque des revendications 1 à 6, comprenant en outre un passage d'amenée d'huile (24) à travers lequel l'huile hydraulique est configurée pour être introduite dans une chambre de pression (16) définie par le plongeur (10) et le cylindre (9), une vanne de retenue (26) réalisée à une extrémité du passage d'amenée d'huile (24) situé à la chambre de pression (16) pour permettre seulement un écoulement de l'huile hydraulique du passage d'amenée d'huile (24) dans la chambre de pression (9), où le cylindre (9) présente un trou traversant (28) ayant un filetage interne (29) sur sa périphérie intérieure, ladite chambre de pression (16) communiquant avec l'air extérieur à travers le trou traversant (28), un élément creux à filetage externe (30) en prise de filetage avec le filetage interne (29) du trou traversant (28) et définissant une chambre de montage de corps de vanne à l'intérieur, un siège de vanne (34) ayant un trou de vanne (35) et réalisé à une extrémité de l'élément à filetage externe (30) près de la chambre de pression (16) pour séparer la chambre de montage de corps de vanne (33) de son extérieur, un corps de vanne (37) installé dans la chambre de montage de corps de vanne (33) pour ouvrir et fermer le trou de vanne (35) du siège de vanne (34), et un ressort de vanne (38) installé dans la chambre de montage de corps de vanne (33) sollicitant le corps de vanne (37) dans une direction pour fermer le trou de vanne (35), où le corps de vanne (37) est configuré pour ouvrir le trou de vanne (35) si la pression dans la chambre de pression (16) dépasse une valeur de pression prédéterminée en relâchant ainsi la pression dans la chambre de pression (16).

8. Tendeur de chaîne selon la revendication 7, où le siège de vanne (34) est un élément séparé de l'élément à filetage externe (30) et est ajusté d'une manière serrée dans et fixé à l'élément à filetage externe (30).

9. Tendeur de chaîne selon la revendication 7 ou 8, où une rainure d'évacuation d'air (39) est formée dans la surface du siège de vanne (34) qui vient en contact avec le corps de vanne (37) par lequel la chambre de montage de vanne (33) communique avec le trou de vanne (35).

10. Tendeur de chaîne selon la revendication 9, où il y a une pluralité de rainures d'évacuation d'air (39) qui sont circonférentiellement espacées les unes des autres.

11. Tendeur de chaîne selon l'une quelconque des revendications 7 à 10, où l'élément à filetage externe (30) comprend une portion d'arbre filetée (30A) et une tête (30B) ayant un plus grand diamètre que la portion d'arbre filetée (30A), et où le tendeur de chaîne comprend en outre une rondelle de ressort (32) ayant deux extrémités circonférentiellement séparées et disposées entre la tête (30B) et le cylindre (9).

12. Tendeur de chaîne selon l'une quelconque des revendications 7 à 10, où l'élément à filetage externe (30) comprend une portion d'arbre filetée (30A) et une tête (30B) ayant un plus grand diamètre que la portion d'arbre filetée (30A), et où le tendeur de chaîne comprend en outre une rondelle (45) incluant une pluralité de dents tordues s'étendant radialement (45a) qui sont circonférentiellement espacées les unes des autres et qui sont disposées entre la tête (30B) et le cylindre (9).

13. Tendeur de chaîne selon l'une quelconque des revendications 7 à 12, comprenant en outre un élément d'arrêt (47) installé dans la chambre de montage de corps de vanne (33) pour restreindre la course de déplacement du corps de vanne (37).

14. Tendeur de chaîne selon la revendication 13, où l'élément d'arrêt (47) comprend une bride (47A) supportant une extrémité du ressort de vanne (38), et un fût (47B) s'étendant de la bride (47A) vers le corps de vanne (37), ledit fût (47B) étant configuré pour supporter le corps de vanne (37).
